# EUROPÄISCHE PATENTSCHRIFT

(11) **EP 3 931 051 B1**
(45) Veröffentlichungstag und Bekanntmachung des Hinweises auf die Patenterteilung: **03.08.2022**
(21) Anmeldenummer: 20720346.4
(22) Anmeldetag: 07.04.2020
(51) Int. Cl.: B60R 21/38

(54) **AUFSTELLBARES KLAPPENSCHARNIER**
DEPLOYABLE FLAP HINGE
CHARNIÈRE D'OUVRANT INSTALLABLE

(30) Priorität: 17.04.2019 DE 202019102218 U
(43) Veröffentlichungstag der Anmeldung: 05.01.2022
(73) Patentinhaber: Edscha Engineering GmbH, 42855 Remscheid (DE)
(72) Erfinder: KÜLLMER, Fabian, 42897 Remscheid (DE)
(74) Vertreter: IPrime Bonnekamp Sparing Patentanwaltsgesellschaft mbH
(86) Internationale Anmeldenummer: PCT/DE2020/100285
(87) Internationale Veröffentlichungsnummer: WO 2020/211902

(56) Entgegenhaltungen:
- EP-A1- 2 345 563
- EP-A1- 2 733 025
- EP-B1- 2 277 746

## Beschreibung

Die Erfindung betrifft ein aufstellbares Klappenscharnier nach dem Oberbegriff des Anspruchs 1, insbesondere ein verriegelbar aufstellbares Klappenscharnier, welches für den Einsatz in einem Fußgängerschutzsystem geeignet ist.

Aus der Praxis sind verschiedene Klappenscharniere bekannt, die dazu bestimmt sind, im Falle eines detektierten Fußgängeraufpralls eine mit dem Klappenscharnier gekoppelte Fronthaube in eine aufgestellte Stellung zu verlagern, beispielsweise durch ein Federpaket, eine pyrotechnische Auslöseanordnung oder dergleichen, damit die in einer aufgestellten Stellung beabstandet von den gefährdenden Komponenten des Motorinnenraums gehaltene Fronthaube eine Deformation erfährt, die den Aufprall bremst.

Derartige Klappenscharniere weisen einen Klappenteil und einen Karosserieteil auf, welche miteinander über eine Gelenkanordnung gelenkig verbunden sind. Das Klappenteil setzt sich dabei in einigen Ausgestaltung aus einem Klappenoberteil und einem Klappenunterteil zusammen, welche ebenfalls über eine weitere Gelenkanordnung gelenkig miteinander verbunden sind und hierdurch scherenartig relativ zueinander verschwenkbar sind. Insbesondere bei Verwendung des Klappenscharnieres für einen Fußgängerschutz ist eine Vorspannkraft zwischen einzelnen Scharnierkomponenten erforderlich, um Toleranzen auszugleichen oder auch störende Geräuschentwicklung durch gegeneinander schlagende Teile zu unterbinden. Beispielsweise können derartige Geräusche dadurch entstehen, dass Verbindungspunkte zwischen den Scharnierteilen nicht immer genau deckungsgleich hergestellt werden können, sodass eine gewisse Beweglichkeit der Teile untereinander immer vorhanden ist.

EP 2 277 746 A1 zeigt ein aufstellbares Klappenscharnier mit einem einer Klappe zugeordnetem Klappenteil und einem einer Fahrzeugkarosserie zugeordnetem Karosserieteil. Das Klappenteil umfasst ein Klappenoberteil, welches direkt mit der Klappe verbindbar ist, und ein Klappenunterteil. Das Klappenteil und das Karosserieteil sind über eine als Viergelenk ausgebildete erste Gelenkanordnung gelenkig miteinander verbunden. Das Klappenoberteil ist mit dem Klappenunterteil über ein als Eingelenk ausgebildete zweite Gelenkanordnung gelenkig verbunden. Durch die zweite Gelenkanordnung sind das Klappenoberteil und das Klappenunterteil relativ zueinander zwischen einer Ruheposition und einer Aufstellposition, welche der Schutzposition der Klappe im Fall eines Aufpralls entspricht, verschwenkbar. Zudem umfasst das bekannte Klappenscharnier durch einen Verriegelungsbolzen und in dem Klappenoberteil bzw. Klappenunterteil vorgesehene Lochungen gebildete Verriegelungsanordnung zur Verriegelung der Aufstellbewegung des Klappenoberteils relativ zu dem Klappenunterteil. Neben dem Verriegelungsbolzen umfasst die Verriegelungsanordung ein als Blattfeder ausgebildetes Arretierlement, welches eine Verriegelung des Klappenteils nach einer manuellen Rückstellung der Klappe von der Aufstellposition in die Ruheposition sicherstellt. Schließlich umfasst das aufstellbare Klappenscharnier ein als Aktor ausgebildetes Vorspannmittel zur Vorspannung des Klappenoberteils in Richtung auf die Aufstellposition im Fall eines Aufpralles. Nachteilig an dem gezeigten Klappenscharnier ist, dass in der Ruheposition keine Vorspannkraft bereitgestellt wird, so dass Toleranzen nicht ausreichend ausgeglichen werden und hierdurch störende Geräusche druch relative Bewegung des Klappenoberteils und des Kappenunterteils entstehen können.

DE 10 2010 023 975 zeigt ein aufstellbares Klappenscharnier mit einem einer Klappe zugeordnetem Klappenteil und einem einer Fahrzeugkarosserie zugeordnetem Karosserieteil. Das Klappenteil und das Karosserieteil sind gelenkig über eine als Viergelenk ausgebildete erste Gelenkanordnung miteinander verbunden. Das Klappenteil umfasst ein Klappenoberteil, welches direkt mit der Klappe verbindbar ist, und ein Klappenunterteil, wobei das Klappenoberteil und das Klappenunterteil miteinander über eine zweite Gelenkanordnung verbunden sind. Durch die zweite Gelenkanordnung ist das Klappenoberteil gegenüber dem Klappenunterteil von einer Ruheposition in eine Aufstellposition schwenkbar. Weiter umfasst das bekannte Klappenscharnier eine Verriegelungsanordnung zur Verriegelung einer Aufstellbewegung des Klappenoberteils, wobei die Verriegelungsanordnung einen Scherbolzen und ein Scherblech umfasst.

EP 2 733 025 A1 zeigt ein aufstellbares Klappenscharnier nach dem Oberbegriff des Anspruchs 1, umfassend ein einer Klappe zugeordnetes Klappenteil und ein einer Fahrzeugkarosserie zugeordnetes Karosserieteil, wobei das Klappenteil ein mit der Klappe unmittelbar verbindbares Klappenoberteil und ein schwenkbar über eine Gelenkanordnung mit dem Klappenoberteil verbundenes Klappenunterteil aufweist. Das Klappenoberteil ist durch eine Antriebsvorrichtung zwischen einer Ruheposition und einer Aufstellposition verschwenkbar. Weiter umfasst das bekannte Klappenscharnier eine Verriegelungsanordung zur Verriegelung der Aufstellbewegung des Klappenoberteils gegenüber dem Klappenunterteil.

Es ist die Aufgabe der Erfindung, ein aufstellbares Klappenscharnier anzugeben, das kostengünstig und bauraumsparend eine Vorspannkraft zwischen Scharnierkomponenten bereitstellt.

Diese Aufgabe wird erfindungsgemäß durch ein aufstellbares Klappenscharnier mit den Merkmalen des unabhängigen Anspruchs gelöst.

Gemäß einem Aspekt der Erfindung ist ein aufstellbares Klappenscharnier geschaffen, umfassend ein einer Klappe zugeordnetes Klappenteil, wobei das Klappenteil ein Klappenoberteil und ein Klappenunterteil umfasst. Das aufstellbare Klappenscharnier umfasst weiter ein einer Fahrzeugkarosserie zugeordnetes Karosserieteil, eine das Klappenteil und das Karosserieteil gelenkig miteinander verbindende erste Gelenkanordnung, eine das Klappenoberteil und Klappenunterteil gelenkig miteinander verbindende zweite Gelenkanordnung, wobei das Klappenoberteil relativ zu dem Klappenunterteil zwischen einer Ruheposition und einer Aufstellposition verschwenkbar ist. Das aufstellbare Klappenscharnier umfasst weiter eine Verriegelungsanordnung zur Verriegelung der Aufstellbewegung des Klappenoberteil und eine Vorspannvorrichtung zur Vorspannung des Klappenoberteil in Richtung auf die Aufstellposition. Das aufstellbare Klappenscharnier zeichnet sich dadurch aus, dass die Vorspannvorrichtung ein einstückig aus einem Teil des Klappenscharniers geformtes Vorspannelement umfasst. Vorteilhaft ist so ein Klappenscharnier geschaffen, welches eine kostengünstige und bauraumsparende Möglichkeit der im Bereich des Fußgängerschutzes erforderlichen Vorspannung von Scharnierteilen bereitstellt. Insbesondere sind keine weiteren Komponenten erforderlich, welche zusätzlich hergestellt bzw. an das Klappenscharnier angebracht werden müssen, da das Vorspannmittel durch entsprechende Anpassung des Herstellungsprozesses des jeweiligen Teiles des Klappenscharniers, an welchem das Vorspannelement angeformt wird, hergestellt werden kann.

Besonders bevorzugt ist das Vorspannelement zumindest abschnittsweise als Metallstreifen ausgebildet. Vorteilhaft lässt sich durch Ausgestaltung der Geometrie in einfacher Weise durch entsprechende Verbiegung eine flexible Einstellung der Vorspannkraft des Vorspannelementes realisieren. In einer besonders vorteilhaften Ausgestaltung besteht das Vorspannelement aus Stahl. Stahl zeichnet sich durch eine hohe Festigkeit, gute Härtbarkeit, Steifheit und Bruchdehnung aus und ist sowohl warm als auch kalt verformbar und in großen Mengen und guter Qualität verfügbar. Vorteilhaft kann so besonders kostengünstig und einfach eine zuverlässige Vorspannung von Scharnierbestandteilen bereitgestellt werden.

In einer besonders bevorzugten Ausgestaltung ist vorgesehen, dass das Vorspannelement aus einem Teil des Klappenteils gebildet ist. Vorteilhaft wird insbesondere sichergestellt, dass das Vorspannelement sehr baumsparend ausgebildet werden kann, da dieses nahe des Klappenoberteil angeformt werden kann und keine unnötige Distanzen überbrückt werden müssen. Entsprechend kann hierdurch das Vorspannelement kompakt ausgebildet sein und unabhängig von der geometrischen Ausgestaltung des Karosserieteils oder anderer Teile des Klappenscharnier flexibel angepasst werden. Besonders bevorzugt wird das Vorspannelement aus einem Teil des Klappenunterteils gebildet. Alternativ hierzu wird das Vorspannelement aus einem Teil des Klappenoberteils gebildet.

Zweckmäßigerweise weist das Vorspannelement einen festen Stützabschnitt zur Abstützung des Vorspannelementes an dem Klappenscharnier auf. Der Stützabschnitt dient dazu, dass eine möglichst konstante Vorspannkraft zwischen den Scharnierteilen sichergestellt wird und gleichzeitig keine Verformungen der an dem Vorspannelement angrenzenden Teile auftritt. Der Stützabschnitt nimmt alle durch das Vorspannelement erzeugten Vorspannkräfte und sonstigen auf das Klappenoberteil wirkenden Kräfte auf und leitet diese an das einstückig mit dem Vorspannelement ausgebildeten Teil des Klappenscharniers weiter. Vorteilhaft wird so eine zuverlässige und dauerhafte Vorspannung sichergestellt.

In einer zweckmäßigen Ausgestaltung weist das Vorspannelement einen Federabschnitt zur Vorspannung des Klappenoberteil in Richtung auf die Aufstellposition auf. Besonders bevorzugt grenzt der Federabschnitt an den Stützabschnitt an, sodass eine zuverlässige Einstellung der Vorspannkraft durch die Anpassung des Federabschnittes definiert ermöglicht wird.

Besonders bevorzugt weist der Federabschnitt ein in Richtung auf das Klappenoberteil gebogene Kontur auf. Hierdurch wird sichergestellt, dass eine Federkraft auf das Klappenoberteil erzeugt werden kann, indem der Federabschnitt mit dem Klappenoberteil in Anlage kommt und durch die Eigenspannung des Vorspannelementes entsprechend eine Vorspannkraft auf das Klappenoberteil erzeugt wird.

Zweckmäßigerweise weist der Federabschnitt im Querschnitt eine geringere Dicke als der Stützabschnitt auf. Hierdurch wird vorteilhaft sichergestellt, dass der Federabschnitt elastisch genug ausgebildet ist, um eine konstante Vorspannkraft bereitzustellen und der Stützabschnitt relativ dazu fester ausgebildet ist und entsprechend nur durch seine Position, jedoch nicht durch seine eigene Elastizität relativ zu dem Klappenoberteil einen Einfluss auf die Vorspannkraft nimmt.

Weitere Vorteile, Merkmale und Eigenschaften der Erfindung ergeben sich aus der nachstehenden Beschreibung eines bevorzugten Ausführungsbeispiels sowie aus den abhängigen Ansprüchen.

Die Erfindung wird nunmehr unter Bezugnahme auf die anliegenden Zeichnungen anhand eines bevorzugten Ausführungsbeispiels der Erfindung näher erläutert.
- Fig. 1: zeigt ein bevorzugtes Ausführungsbeispiel eines aufstellbaren Klappenscharniers in einer Seitenansicht in einem teilweise aufgestellten Zustand.
- Fig. 2: zeigt das in Fig. 1 gezeigte Ausführungsbeispiel eines aufstellbaren Klappenscharniers in einer Seitenansicht in einem verriegelten Zustand.

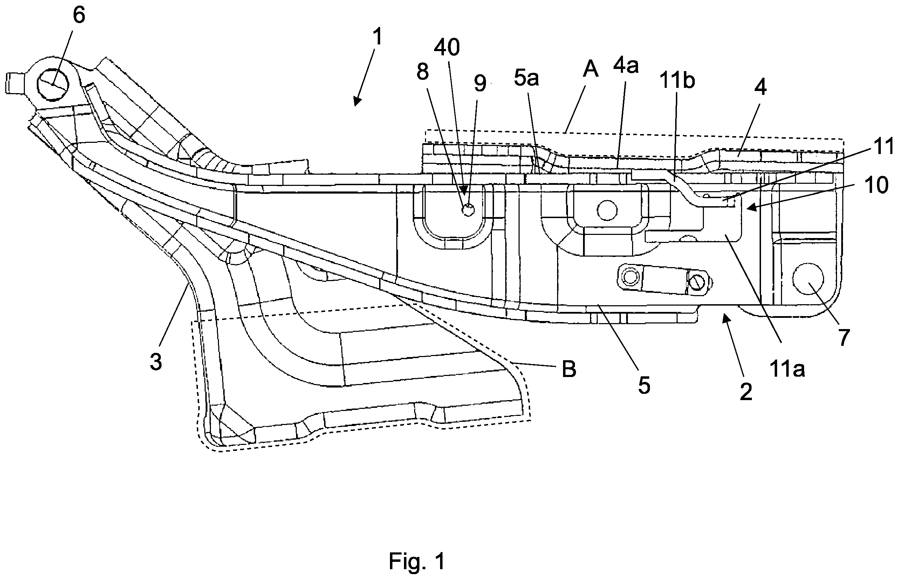

Fig. 1 zeigt ein bevorzugtes Ausführungsbeispiel eines erfindungsgemäßen aufstellbaren Klappenscharniers 1 in einer Seitenansicht in einem teilweise aufgestellten Zustand. Das Klappenscharnier 1 umfasst ein einer Klappe A zugeordnetes Klappenteil 2 und ein der Fahrzeugkarosserie zugeordnetes Karosserieteil 3, wobei das Klappenteil 2 aus einem Klappenoberteil 4, an welchem die Klappe A angeschlossen ist, und einem Klappenunterteil 5 besteht. Das Klappenteil 2 ist gegenüber dem Karosserieteil 3 über eine als Eingelenk ausgebildete erste Gelenkanordnung 6 verschwenkbar, um die Klappe A zwischen einer geschlossenen Stellung und einer geöffneten Stellung zu verschwenken..

Das Klappenoberteil 4 und das Klappenunterteil 5 sind über ein eine als Eingelenk ausgebildete zweite Gelenkanordnung 7 schwenkbar miteinander verbunden, sodass das Klappenoberteil 4 und das Klappenunterteil 5 scherenartig zueinander verschwenkt werden können. Durch diese scherenartige Kopplung wird insbesondere ermöglicht, dass das dem hier nicht gezeigten Haubeschloss abgewandte Ende der Klappe A gegenüber dem Motorblock in bekannter Weise nach oben anzuheben bzw. aufzustellen.

Das Klappenunterteil 5 weist einem mittleren Abschnitt eine Bohrung 8 in einer Seitenwand auf, welches mit einem fest mit dem Klappenoberteil 4 verbundenen Nietbolzen 9, welcher hier teilweise verdeckt wird, in Durchgriff gebracht werden kann, sodass insbesondere hin zu einer Aufstellposition des Klappenoberteils 4 und des Klappenunterteils 5, in welcher diese einen Winkel miteinander einschließen, ein entsprechender Anschlag bzw. eine Verriegelung geschaffen wird. Die Bohrung 8 und den Nietbolzen 9 bilden so gemeinsam eine Verriegelungsanordnung 40 zur Verriegelung einer Aufstellbewegung des Klappenoberteils 4.

Der Nietbolzen 9 wird bei Auslösung einer Fußgängerschutzfunktion abgeschert, indem über eine hier nicht gezeigte Auslösungsanordnung eine Kraft zwischen dem Klappenoberteil 4 und dem Klappenunterteil 5 erzeugt wird, um das Klappenoberteil 4 relativ zu dem Klappenunterteil 5 in eine aufgestellte Position zu verlagern.

In der Nähe des Eingelenks 7, um welche das Klappenoberteil 4 relativ zu dem Klappenunterteil 5 schwenkbar ist, ist eine Vorspannvorrichtung 10 an der Seitenwand des Klappenunterteil 5 angeordnet. Die Vorspannvorrichtung 10 umfasst ein abschnittsweise als Metallstreifen ausgebildetes Vorspannelement 11, welches einstückig aus dem Klappenunterteil 5 geformt ist und aus Stahl besteht. Das Vorspannelement 11 weist einen L-förmigen Stützabschnitt 11a auf, welcher an die Seitenwand des Klappenunterteils 5 angrenzt.

Seitlich von dem Stützabschnitt 11a abragend umfasst das Vorspannelement 11 einen Federabschnitt 11b, welcher als Federzunge ausgebildet ist. Der Federabschnitt 11b weist im Querschnitt eine deutlich kleinere Dicke als der angrenzende L-förmige Stützabschnitt 11a auf und ist entsprechend biegsam und dazu geeignet eine konstante Federkraft zwischen dem Klappenoberteil 4 und dem Klappenunterteil 5 zu erzeugen.

Der Federabschnitt 11b liegt mit einem von dem Stützabschnitt 11a beabstandeten Ende an einer Unterkante 4a des Klappenoberteils 4 an, sodass der Federabschnitt 11b eine Vorspannkraft auf das Klappenoberteil 4 nach oben in Richtung auf eine Aufstellposition bewirken kann. In dem hier gezeigten Zustand des Klappenscharniers 1 liegt das Klappenoberteil 4 auf dem Federabschnitt 11b locker auf.

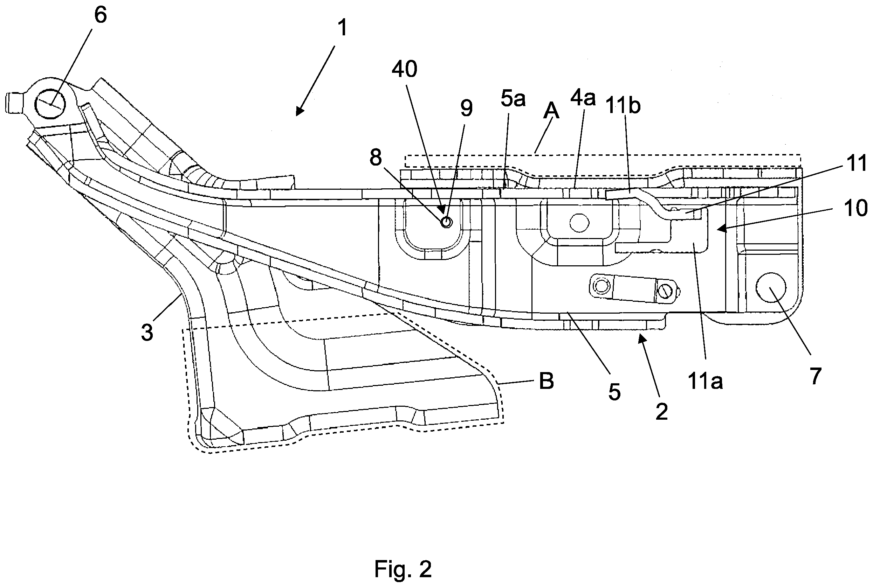

Fig. 2 zeigt das in Fig. 1 gezeigte Ausführungsbeispiel eines aufstellbaren Klappenscharniers in einem verriegelten Zustand. Hier wurde das Klappenoberteil 4 um das Eingelenk 7 in eine Ruheposition verschwenkt, in der die Unterkante 4a des Klappenoberteils 4 und eine Oberkante 5a des Klappenunterteil 5 parallel zueinander verlaufen. Dieser Zustand entspricht der Situation, indem die mit dem Klappenscharnier 1 bzw. dem Klappenoberteil 4 verbundene Klappe A im normalen Betrieb zwischen einer geöffneten und geschlossenen Position durch Verschwenkung um das Eingelenk 6 verlagert werden kann. Der Nietbolzen 9 durchsetzt in diesem Zustand die Bohrung 8 in der Seitenwand des Klappenunterteil 5, sodass eine Verschwenkung des Klappenoberteil 4 relativ zu dem Klappenoberteil 5 verriegelt ist.

Wie in Fig. 2 zu erkennen, wurde der Federabschnitt 11b durch die Verlagerung des Klappenoberteils 4 in die Ruheposition durch die Unterkante 4a nach unten hin verbogen, wobei aufgrund der Eigenspannung des Federabschnittes 11b eine Vorspannkraft durch das Vorspannelement 11 auf das Klappenoberteil 4 in Richtung auf die Aufstellposition, in welcher das Klappenoberteil 4 und das Klappenunterteil 5 einen Winkel miteinander einschließen, wirkt.

Vorteilhaft wirken hierdurch keine wechselnden Belastungen oder Kraftspitzen auf den Nietbolzen 9, welche sich ohne eine entsprechende Vorspannung mittels des Vorspannelementes 11 dadurch ergeben, dass äußere Kräfte während der Fahrt auf die Klappe A einwirken und so eine mitunter auch ruckartige Bewegung des Klappenoberteils 4 induzieren können. Derartig wechselnde Belastungen führen entsprechend zu einem störenden Betriebsgeräusch, da der Nietbolzen 9 in der Bohrung 8 an die Innenkante der Bohrung 8 anschlägt. Im Extremfall ist auf Dauer auch ein Ermüdungsbruch des Nietbolzens 9 möglich, was zu einer ungewollten Entriegelung des aufstellbaren Klappenscharniers führt.

Aufgrund der durch das Vorspannelement 11 bereitgestellten Vorspannung zwischen dem Klappenoberteil 4 und dem Klappenunterteil 5 ergibt sich vorteilhaft eine schwellende Belastung im Bereich des Nietbolzens 9, welche dafür sorgt, dass im normalen Betrieb des Fahrzeugs kein Anschlagen des Nietbolzens 9 in der Bohrung 8 auftritt, sodass sowohl eine Reduzierung des Betriebsgeräusches als auch eine Minimierung der Gefahr eines Ermüdungsbruches des Nietbolzens 9 erreicht wird.

Vorstehend wurde die Erfindung anhand eines Ausführungsbeispiels erläutert, bei der das Vorspannmittel 11 als aus dem Material des Klappenunterteil 5 geformte Federzunge oder Metallstreifen ausgebildet ist. Es versteht sich, dass das Vorspannelement 11 auch aus dem Material des Klappenoberteils 4 gebildet sein kann, wobei das Vorspannmittel 11 beispielsweise an der Unterkante 4a des Klappenoberteils 4 angeformt sein kann. Weiter könnte die Unterkante 4a an einem Punkt durchbrochen sein, wobei die Oberkante 4a diesem Punkt gegenüberliegend einen streifenförmigen Abschnitt aufweist, welcher in Richtung auf die Oberkante 5a des Klappenunterteil 5 gebogen ist und so eine Vorspannkraft auf das Klappenoberteil 4 in Richtung auf die Aufstellposition bewirkt.

Vorstehend wurde die Erfindung anhand eines Ausführungsbeispiels erläutert, bei dem das Vorspannmittel einen Federabschnitt 11b und einen zusätzlich geformten Stützabschnitt 11a umfasst. Es versteht sich, dass der Federabschnitt 11b seitlich von der Seitenwand des Klappenunterteils 5 abtragen kann, ohne zusätzliche Abstützung in vertikaler Richtung. Dies kann dadurch realisiert werden, dass der Querschnitt des Federabschnittes 11b zumindest abschnittsweise etwas dicker gestaltet ist und so gleichzeitig eine Vorspannkraft bereitstellt und gleichzeitig so formstabil ist, dass die Vorspannkraft auf Dauer weitgehend konstant bleibt.

Vorstehend wurde die Erfindung anhand eines Ausführungsbeispiels erläutert, bei dem der Federabschnitt 11b des Vorspannelementes 11 einen S-förmigen Querschnitt aufweist. Es versteht sich, dass der Federabschnitt 11b jede beliebige Form im Querschnitt aufweisen kann, soweit diese eine Vorspannkraft auf das Klappenoberteil bereitstellt, um dieses in Richtung auf die Aufstellposition vorzuspannen. Beispielsweise könnte der Federabschnitt 11b L-förmig ausgebildet sein, wobei sich der kurze Schenkel in Anlage mit der Unterkante 4a des Klappenunterteils 4 befindet.

## Patentansprüche

1. Aufstellbares Klappenscharnier (1), umfassend
ein einer Klappe (A) zugeordnetes Klappenteil (2), wobei das Klappenteil (2) ein Klappenoberteil (4) und ein Klappenunterteil (5) umfasst,
ein einer Fahrzeugkarosserie (B) zugeordnetes Karosserieteil (3),
eine das Klappenteil (2) und das Karosserieteil (3) gelenkig verbindende erste Gelenkanordnung (6),
eine das Klappenoberteil (4) und Klappenunterteil (5) gelenkig miteinander verbindende zweite Gelenkanordnung (7), wobei das Klappenoberteil (4) relativ zu dem Klappenunterteil (5) zwischen einer Ruheposition und einer Aufstellposition verschwenkbar ist, eine Verriegelungsanordnung (40) zur Verriegelung der Aufstellbewegung des Klappenoberteils (4), und
eine Vorspannvorrichtung (10) zur Vorspannung des Klappenoberteils (4) in Richtung auf die Aufstellposition,
**dadurch gekennzeichnet,**
**dass** die Vorspannvorrichtung (10) ein einstückig aus einem Teil des Klappenscharniers (1) geformtes Vorspannelement (11) umfasst.

2. Aufstellbares Klappenscharnier nach Anspruch 1, **dadurch gekennzeichnet, dass** das Vorspannelement (11) als Metallstreifen ausgebildet ist.

3. Aufstellbares Klappenscharnier nach Anspruch 1 oder 2, **dadurch gekennzeichnet, dass** das Vorspannelement (11) aus Stahl besteht.

4. Aufstellbares Klappenscharnier nach einem der vorhergehenden Ansprüche, **dadurch gekennzeichnet, dass** das Vorspannelement (11) aus einem Teil des Klappenteils (2) gebildet ist.

5. Aufstellbares Klappenscharnier nach einem der vorhergehenden Ansprüche, **dadurch gekennzeichnet, dass** das Vorspannelement (11) aus einem Teil des Klappenunterteils (5) gebildet wird.

6. Aufstellbares Klappenscharnier nach einem der Ansprüche 1 bis 4, **dadurch gekennzeichnet, dass** das Vorspannelement (11) aus einem Teil des Klappenoberteils (4) gebildet wird.

7. Aufstellbares Klappenscharnier nach einem der vorhergehenden Ansprüche, **dadurch gekennzeichnet, dass** das Vorspannelement (11) einen festen Stützabschnitt (11a) zur Abstützung des Vorspannelements (11) an dem Klappenscharnier aufweist.

8. Aufstellbares Klappenscharnier nach Anspruch 7, **dadurch gekennzeichnet, dass** das Vorspannelement (11) einen Federabschnitt (11b) zur Vorspannung des Klappenoberteils (4) in Richtung auf die Aufstellposition aufweist.

9. Aufstellbares Klappenscharnier nach Anspruch 8, **dadurch gekennzeichnet, dass** der Federabschnitt (11b) ein in Richtung auf das Klappenoberteil (4) gebogene Kontur aufweist.

10. Aufstellbares Klappenscharnier nach Anspruch 9, **dadurch gekennzeichnet, dass** der Federabschnitt (11b) im Querschnitt eine geringere Dicke als der Stützabschnitt (11a) aufweist.

## Claims

1. Deployable flap hinge (1), comprising
a flap part (2) assigned to a flap (A), the flap part (2) comprising an upper flap part (4) and a lower flap part (5),
a body part (3) assigned to a vehicle body (B),
a first joint assembly (6) which connects the flap part (2) and the body part (3) in an articulated manner,
a second joint assembly (7) connecting the upper flap part (4) and lower flap part (5) in an articulated manner, the upper flap part (4) being pivotable relative to the lower flap part (5) between an idle position and a deployed position,
a locking arrangement (40) for locking the deployment movement of the upper flap part (4), and
a preload device (10) for preloading the upper flap part (4) in the direction towards the deployed position,
**characterized in that**
the preload device (10) comprises a preload element (11) formed in a single piece from a part of the flap hinge (1).

2. Deployable flap hinge according to claim 1, **characterized in that** the preload element (11) is designed as a metal strip.

3. Deployable flap hinge according to claim 1 or 2, **characterized in that** the preload element (11) is made of steel.

4. Deployable flap hinge according to any of the preceding claims, **characterized in that** the preload element (11) is formed from a portion of the flap part (2).

5. Deployable flap hinge according to one of the claims, **characterized in that** the preload element (11) is formed from a portion of the lower flap part (5).

6. Deployable flap hinge according to any of claims 1 to 4, **characterized in that** the preload element (11) is formed from a portion of the upper flap part (4).

7. Deployable flap hinge according to any of the preceding claims, **characterized in that** the preload element (11) has a fixed support portion (11a) for supporting the preload element (11) on the flap hinge.

8. Deployable flap hinge according to claim 7, **characterized in that** the preload element (11) has a spring portion (11b) for preloading the upper flap part (4) of the flap in the direction towards the deployed position.

9. Deployable flap hinge according to claim 8, **characterized in that** the spring portion (11b) has a contour which is bent in the direction towards the top part (4) of the flap.

10. Deployable flap hinge according to claim 9, **characterized in that** the spring portion (11b) is less thick in cross section than the support portion (11a).

## Revendications

1. Charnière de volet redressable (1), comprenant
une partie volet (2) associée à un volet (A), la partie volet (2) comprenant une partie volet supérieure (4) et une partie volet inférieure (5),
une partie carrosserie (3) associée à une carrosserie de véhicule
(B), un premier ensemble d'articulation (6) reliant la partie volet (2) et la partie carrosserie (3) de manière articulée,
un deuxième ensemble d'articulation (7) reliant la partie volet supérieure (4) et la partie volet inférieure (5) l'une à l'autre de manière articulée, la partie volet supérieure (4) pouvant pivoter par rapport à la partie volet inférieure (5) entre une position de repos et une position redressée,
un ensemble de verrouillage (40) destiné à verrouiller le mouvement de redressement de la partie volet supérieure (4), et
un dispositif de précontrainte (10) destiné à précontraindre la partie volet supérieure (4) en direction de la position redressée,
**caractérisé en ce**
**que** le dispositif de précontrainte (10) comprend un élément de précontrainte (11) formé d'une seule pièce à partir d'une partie de la charnière de volet (1).

2. Charnière de volet redressable selon la revendication 1, **caractérisée en ce que** l'élément de précontrainte (11) est réalisé sous la forme d'une lame de métal.

3. Charnière de volet redressable selon la revendication 1 ou 2, **caractérisée en ce que** l'élément de précontrainte (11) est en acier.

4. Charnière de volet redressable selon l'une des revendications précédentes, **caractérisée en ce que** l'élément de précontrainte (11) est formé à partir d'une partie de la partie volet (2).

5. Charnière de volet redressable selon l'une des revendications précédentes, **caractérisée en ce que** l'élément de précontrainte (11) est formé à partir d'une partie de la partie volet inférieure (5).

6. Charnière de volet redressable selon l'une des revendications 1 à 4, **caractérisée en ce que** l'élément de précontrainte (11) est formé à partir d'une partie de la partie volet supérieure (4).

7. Charnière de volet redressable selon l'une des revendications précédentes, **caractérisée en ce que** l'élément de précontrainte (11) comporte une portion de support fixe (11a) destinée à supporter l'élément de précontrainte (11) au niveau de la charnière de volet.

8. Charnière de volet redressable selon la revendication 7, **caractérisée en ce que** l'élément de précontrainte (11) comporte une portion à ressort (11b) destinée à précontraindre la partie volet supérieure (4) en direction de la position redressée.

9. Charnière de volet redressable selon la revendication 8, **caractérisée en ce que** la portion à ressort (11b) présente un contour coudé en direction de la partie volet supérieure (4).

10. Charnière de volet redressable selon la revendication 9, **caractérisée en ce que** la portion à ressort (11b) a une épaisseur inférieure à celle de la portion de support (11a) en coupe transversale.
